# EUROPÄISCHE PATENTANMELDUNG

(11) **EP 2 354 009 A1**
(43) Veröffentlichungstag der Anmeldung: **10.08.2011**
(21) Anmeldenummer: 11001031.1
(22) Anmeldetag: 09.02.2011
(51) Int. Cl.: B64G 1/64

(54) **Abschleppvorrichtung für ein im Orbit befindliches Raumfahrzeug, Raumfahrzeug und Abschlepp-Raumfahrzeug**

(30) Priorität: 10.02.2010 DE 102010007699
(71) Anmelder: Astrium GmbH, 82024 Taufkirchen (DE)
(72) Erfinder: Knirsch, Ulrich, 88677 Markdorf (DE)
(74) Vertreter: Avenhaus, Beate

(57) **Zusammenfassung**

Die Erfindung beschreibt eine Abschleppvorrichtung (1) für ein im Orbit befindliches Raumfahrzeug (100) mit einem Kabel (10), dessen erstes Ende (11) dazu vorgesehen ist, dauerhaft mit einem potentiell abzuschleppenden Raumfahrzeug (100) gekoppelt zu sein und dessen zweites Ende (12) zum Zweck des Abschleppens zur zumindest temporären Verbindung mit einem Abschlepp-Raumfahrzeug (200) ausgebildet ist. An dem zweiten Ende (12) des Kabels (10) sind ein Verbindungsstück (13) zur mechanischen Verbindung mit einem komplementären Verbindungsstück (213) des Abschlepp-Raumfahrzeugs (200) und eine Positionierhilfe (14) zur vereinfachten Detektion des Verbindungsstücks (13) durch das Abschlepp-Raumfahrzeug (200) angeordnet.

## Beschreibung

Die Erfindung betrifft eine Abschleppvorrichtung für ein im Orbit befindliches Raumfahrzeug. Die Erfindung betrifft ferner ein Raumfahrzeug, insbesondere einen Satelliten, sowie ein Abschlepp-Raumfahrzeug.

Durch anhaltende und zunehmende Nutzung des Weltraums entstandener Schrott gefährdet Raumfahrzeuge, wie z.B. Satelliten und bemannte Raumschiffe. Im Allgemeinen sollten sich Raumfahrzeuge vor Ablauf ihrer Lebensdauer selbst kontrolliert "entsorgen". Tritt während der Lebensdauer eines Raumfahrzeugs jedoch ein Defekt auf, so ist unter Umständen die eigenständige Entsorgung nicht mehr gewährleistet.

Es gibt deshalb Überlegungen, defekte Raumfahrzeuge durch spezielle Raumfahrzeuge, sog. Abschlepp-Raumfahrzeuge, zu entsorgen. Hierzu müssen sich die Abschlepp-Raumfahrzeuge in unmittelbare Nähe eines defekten Raumfahrzeugs, wie z.B. einen Satelliten, begeben und dort an eine Triebwerksdüse oder dergleichen andocken. Ein derartiges Andock-Manöver ist jedoch mit Schwierigkeiten verbunden, da defekte Raumfahrzeuge häufig taumeln. Eine Kollision mit dem defekten Raumfahrzeug muss jedoch unbedingt vermieden werden, da ansonsten das Abschlepp-Raumfahrzeug gegebenenfalls selber Beschädigungen davonträgt.

Es ist daher Aufgabe der vorliegenden Erfindung, eine Abschleppvorrichtung anzugeben, welche das Abschleppen eines defekten Raumfahrzeugs auf einfachere und gefahrlosere Weise ermöglicht. Ferner sollen ein Raumfahrzeug und ein Abschlepp-Raumfahrzeug angegeben werden, welche das einfache und gefahrlose Abschleppen und Entsorgen eines defekten Raumfahrzeugs ermöglichen.

Diese Aufgaben werden gelöst durch eine Abschleppvorrichtung gemäß den Merkmalen des Patentanspruchs 1, ein Raumfahrzeug gemäß den Merkmalen des Patentanspruchs 13 und ein Abschlepp-Raumfahrzeug gemäß den Merkmalen des Patentanspruchs 14. Vorteilhafte Ausgestaltungen sind in den abhängigen Ansprüchen angegeben.

Die Erfindung schafft eine Abschleppvorrichtung für ein im Orbit befindliches Raumfahrzeug. Die Abschleppvorrichtung umfasst ein Kabel, dessen erstes Ende dazu vorgesehen ist, dauerhaft mit einem potentiell abzuschleppenden Raumfahrzeug gekoppelt zu sein und dessen zweites Ende zum Zweck des Abschleppens zur zumindest temporären Verbindung mit einem Abschlepp-Raumfahrzeug ausgebildet ist, wobei an dem zweiten Ende des Kabels ein Verbindungsstück zur mechanischen Verbindung mit einem komplementären Verbindungsstück des Abschlepp-Raumfahrzeugs und eine Positionierhilfe zur vereinfachten Detektion des Verbindungsstücks durch das Abschlepp-Raumfahrzeug angeordnet sind.

Bei dem Raumfahrzeug und dem Abschlepp-Raumfahrzeug handelt es sich beispielsweise um Satelliten. Es können jedoch auch bemannte Raumfahrzeuge sein.

Die Abschleppvorrichtung wird vorzugsweise präventiv an jedem neu zu startenden Raumfahrzeug installiert, um im Falle eines Defekts ein Abschleppen über die Abschleppvorrichtung zu ermöglichen.

Durch das bei der erfindungsgemäßen Abschleppvorrichtung vorgesehene Kabel kann das "Andocken" des Abschlepp-Raumfahrzeugs an einem abzuschleppenden Raumfahrzeug in ausreichender Entfernung erfolgen, so dass die Gefahr einer Kollision zwischen dem abzuschleppenden Raumfahrzeug und dem Abschlepp-Raumfahrzeug minimiert ist. Die erfindungsgemäße Abschleppvorrichtung lässt sich platzsparend an den mit dieser Vorrichtung ausgestatteten Raumfahrzeugen anbringen. Das Abschleppen eines defekten Raumfahrzeugs weist darüber hinaus den prinzipiellen Vorteil auf, dass Kollisionen, die weiteren Weltraummüll erzeugen, verhindert werden können. Durch das Vorsehen der Positionierhilfe am freien Ende des Kabels der Abschleppvorrichtung kann das freie Ende durch das Abschlepp-Raumfahrzeug auf einfachere Weise lokalisiert werden. Hierdurch kann die Verbindung der beiden Verbindungsstücke vereinfacht und zeitlich beschleunigt werden.

Vorzugsweise ist an dem zweiten Ende des Kabels eine derart beschaffene Masse angeordnet, dass eine Taumelbewegung des Kabels und/oder des abzuschleppenden Raumfahrzeugs reduziert werden. Bei einem abzuschleppenden Raumfahrzeug muss typischerweise davon ausgegangen werden, dass dieses eine Taumelbewegung ausführt, welche das Andocken eines Abschlepp-Raumfahrzeugs prinzipiell erschwert. Um das Trägheitsmoment des abzuschleppenden Raumfahrzeugs zu vergrößern und eine eventuelle Taumelbewegung zu bremsen, wird daher an dem freien Ende des Kabels, mit dem die Verbindung mit dem Abschlepp-Raumfahrzeug erfolgen soll, die Masse vorgesehen. Hierdurch ist die Verbindung des Verbindungsstücks am zweiten Ende des Kabels der Abschleppvorrichtung und des komplementären Verbindungsstücks des Abschlepp-Raumfahrzeugs vereinfacht. Besonders zweckmäßig ist es, wenn die Masse durch das Verbindungsstück und/oder die Positionierhilfe selbst bereitgestellt sind, da dann keinerlei zusätzliche Komponenten notwendig sind.

Um eine Kollision zwischen einem defekten, abzuschleppenden Raumfahrzeug und dem Abschlepp-Raumfahrzeug beim Abschleppen zu vermeiden, ist es zweckmäßig, wenn das Kabel eine Länge von 5 bis 25 m, insbesondere von 8 bis 12 m, und am Meisten bevorzugt von 10 m aufweist.

Gemäß einer weiteren Ausgestaltung ist das Verbindungsstück als standardisierter Adapter ausgebildet. Hierdurch können durch ein Abschlepp-Raumfahrzeug Raumfahrzeuge unterschiedlicher Herstellung abgeschleppt werden.

Um die Detektion und das Greifen des freien, zweiten Endes des Kabels durch das Abschlepp-Raumfahrzeug zu erleichtern, ist weiterhin vorgesehen, dass die Positionierhilfe einen Reflektor und/oder einen Permanentmagneten umfasst. Der Reflektor kann zur optischen Detektion oder für eine Detektion mittels RF (Radio Frequency) ausgebildet sein. Der Reflektor und/oder der Permanentmagnet können am oder im Verbindungsstück des Kabels angeordnet werden. Ebenso kann das Verbindungsstück selbst reflektierend und/oder magnetisch ausgebildet werden. Hierdurch kann die Herstellung des Kontakts von Verbindungsstück und komplementärem Verbindungsstück des Abschlepp-Raumfahrzeugs erleichtert werden. Nach der Herstellung der Verbindung von Verbindungsstück und komplementärem Verbindungsstück kann darüber hinaus ein weiterer, z.B. lösbarer Verriegelungsmechanismus vorgesehen sein, welcher die sichere mechanische Verbindung der beiden Komponenten bis zu einer bestimmten Kraft erlaubt.

Gemäß einer weiteren zweckmäßigen Ausgestaltung weist die Vorrichtung eine Kabelaufnahme auf, welche das Kabel raumsparend aufnimmt und dieses nach Erhalt eines Ansteuersignals zur Verbindung mit dem komplementären Verbindungsstück des Abschlepp-Raumfahrzeugs ausfährt, um das Raumfahrzeug abschleppen zu lassen. Dies bedeutet, das erste Ende des Kabels ist über die Kabelaufnahme mit dem potentiell abzuschleppenden Raumfahrzeug mechanisch verbunden. Durch die Kabelaufnahme wird sichergestellt, dass das Kabel solange in dieser bevorratet wird, bis ein Defekt des Raumfahrzeugs auftritt. Erst nach Erhalt des Ansteuersignals wird das Kabel durch die Kabelaufnahme freigegeben, so dass sich dieses von dem defekten Raumfahrzeug entfernen und durch das Abschlepp-Raumfahrzeug zum Abschleppen und Entsorgen gegriffen werden kann.

Zweckmäßigerweise ist die Kabelaufnahme hierzu mit einer Auslösevorrichtung gekoppelt, welche das Ausfahren des Kabels steuert. Diese kann in einer Variante elektrisch betreibbar sein. Um die Funktion der Auslösevorrichtung auch im Falle eines elektrischen Defekts des Raumfahrzeugs sicherzustellen, ist weiter vorgesehen, dass die Auslösevorrichtung über eine autonome Stromversorgung verfügt, welche das Auslösen und damit das Ausfahren des Kabels aus der Kabelaufnahme bewerkstelligen kann. Alternativ oder zusätzlich ist die Auslösevorrichtung mechanisch betreibbar. Hierzu kann diese beispielsweise einen Federspeicher umfassen, so dass das Kabel über eine Federkraft ausgefahren wird, sobald die autonome Stromversorgung beispielsweise ausgefallen ist. Bevorzugt ist die Auslösevorrichtung sowohl elektrisch als auch mechanisch betreibbar, um eine Redundanz für das Ausfahren des Kabels zu haben (Fail-Safe-Prinzip).

Ferner umfasst die Abschleppvorrichtung ein mit der Auslösevorrichtung gekoppeltes Detektionsmittel, welches dazu ausgebildet ist, die Annäherung eines Abschleppraumfahrzeugs zu detektieren und, insbesondere bei Unterschreiten einer vorgegebenen Distanz, der Auslösevorrichtung das Ansteuersignal zuzuführen, um das Ausfahren des Kabels zu initiieren. Das Detektionsmittel und das Abschlepp-Raumfahrzeug können hierzu beispielsweise miteinander kommunizieren, z.B. über eine Infrarot-Schnittstelle. Die Annäherung des Abschlepp-Raumfahrzeugs kann durch das abzuschleppende Raumfahrzeug auch optisch detektiert werden. Auch andere Varianten der Detektion der Annäherung sind prinzipiell einsetzbar.

Die Erfindung schafft ferner ein Raumfahrzeug, insbesondere einen Satelliten, das eine Abschleppvorrichtung der oben bezeichneten Art umfasst. Ein erfindungsgemäßes Raumfahrzeug weist die gleichen Vorteile auf, wie diese in Verbindung mit der erfindungsgemäßen Abschleppvorrichtung beschrieben wurden.

Die Erfindung schafft ferner ein Abschlepp-Raumfahrzeug, insbesondere einen (Abschlepp-)Satelliten, das ein Verbindungsstück zur mechanischen Verbindung mit einem an dem zweiten Ende eines Kabels angeordneten komplementären Verbindungsstück einer Abschleppvorrichtung der oben bezeichneten Art umfasst.

Gemäß einer weiteren zweckmäßigen Ausgestaltung umfasst das Abschlepp-Raumfahrzeug Detektionsmittel zur Detektion der Positionierhilfe des Verbindungsstücks der Abschleppvorrichtung. Das Detektionsmittel des Abschlepp-Raumfahrzeugs kann hierzu beispielsweise eine Kamera oder andere Sensoren aufweisen.

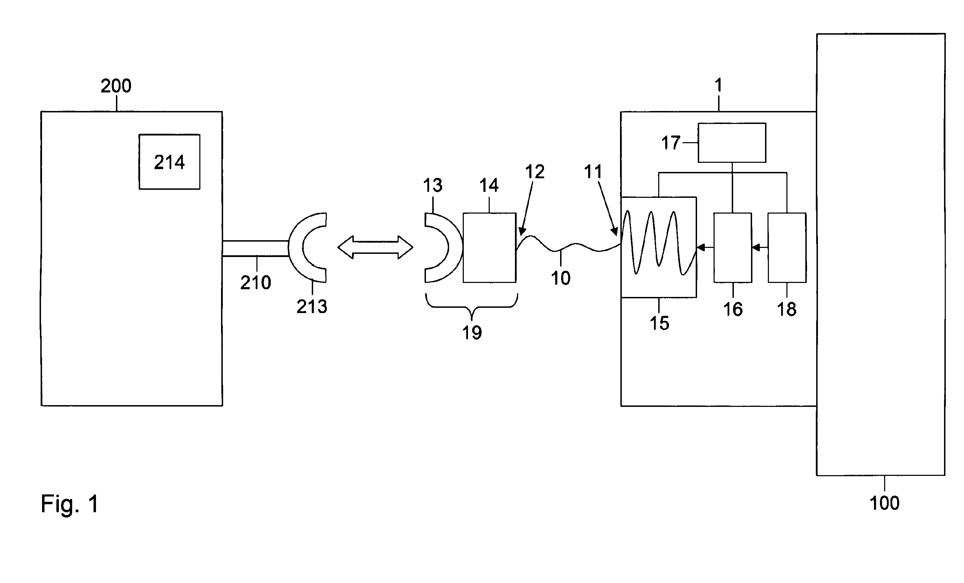

Die Erfindung wird nachfolgend näher anhand eines Ausführungsbeispiels in der Zeichnung erläutert.

Die einzige Figur zeigt in einer schematischen Darstellung eine erfindungsgemäße Abschleppvorrichtung, die an einem potentiell abzuschleppenden Raumfahrzeug angeordnet ist, das im Falle eines Defekts durch ein Abschlepp-Raumfahrzeug abgeschleppt und entsorgt wird.

In der Figur ist mit dem Bezugszeichen 1 eine erfindungsgemäße Abschleppvorrichtung gekennzeichnet. Die Abschleppvorrichtung 1 ist an einem potentiell abzuschleppenden Raumfahrzeug 100 (nachfolgend als Satellit bezeichnet) befestigt. Die Abschleppvorrichtung 1 stellt eine "Abschlepphilfe" dar, die einem Abschlepp-Raumfahrzeug 200 (nachfolgend: Abschlepp-Satellit) das Ankoppeln an den defekten Satelliten 100 erleichtert. Um in den Genuss der Vorteile der erfindungsgemäßen Abschleppvorrichtung 1 zu kommen, ist die Abschleppvorrichtung 1 an jedem neu zu startenden Satelliten 100 vorzusehen.

Die Abschleppvorrichtung 1 umfasst ein Kabel 10, dessen erstes Ende 11 an bzw. in einer Kabelaufnahme 15 der Abschleppvorrichtung 1 befestigt ist. Ein zweites, freies Ende 12 ist zum Zweck des Abschleppens des Satelliten 100 zur zumindest temporären Verbindung mit dem Abschlepp-Satelliten 200 ausgebildet. An dem zweiten Ende 12 des Kabels 10 ist ein Verbindungsstück 13 zur mechanischen Verbindung mit einem komplementären Verbindungsstück 213 des Abschlepp-Satelliten 200 vorgesehen. Um dem Abschlepp-Satelliten 200 das Erkennen und Greifen des Verbindungsstücks 13 zu erleichtern, ist an dem zweiten Ende 12 ferner eine Positionierhilfe 14 angeordnet, welche die vereinfachte Detektion des Verbindungsstücks 13 durch das Abschlepp-Raumfahrzeug 200 ermöglicht. Die Positionierhilfe 14 kann beispielsweise einen Reflektor und/oder einen Permanentmagneten umfassen. Die Positionierhilfe 14 und das Verbindungsstück 13 müssen nicht, wie dies in der schematischen Figur dargestellt ist, zwei unterschiedliche Bauteile darstellen. Vielmehr kann das Verbindungsstück 13 selbst reflektierend und/oder permanentmagnetisch ausgebildet sein, um das Erkennen und Fassen für das komplementäre Verbindungsstück 213 zu erleichtern.

Im Falle eines Defekts des Satelliten 100 führt dieser häufig eine Taumelbewegung aus, welche das Abschleppen erschwert. Es ist deshalb vorgesehen, eine Masse am zweiten, freien Ende 12 des Kabels 10 vorzusehen, um das Trägheitsmoment des defekten Satelliten 100 zu vergrößern. Hierdurch wird eine eventuelle Taumelbewegung gebremst und das Einfangen, insbesondere das Verbinden von Verbindungsstück 13 und komplementärem Verbindungsstück 213, vereinfacht. Die Masse kann als zusätzliches Bauteil am zweiten Ende 12 des Kabels 10 vorgesehen sein. Die Masse kann auch durch das Verbindungsstück 13 und/oder die Positionierhilfe 14 bereitgestellt sein.

Die Kabelaufnahme 15 nimmt das Kabel - solange der Satellit 100 keinen Defekt aufweist - raumsparend auf. Nach Erhalt eines Ansteuersignals von einer Auslösevorrichtung 16 fährt die Kabelaufnahme 15 das Kabel 10 zur Verbindung mit dem komplementären Verbindungsstück 213 des Abschlepp-Satelliten 200 aus, so dass das Raumfahrzeug 100 abgeschleppt werden kann. Die Abgabe des Ansteuersignals durch die Auslösevorrichtung 16 erfolgt beispielsweise dann, wenn die Annäherung eines Abschlepp-Raumfahrzeugs 200 detektiert wurde und gleichzeitig ein Defekt bei dem Satelliten 100 vorliegt. Hierzu verfügt die Abschleppvorrichtung 1 über ein mit der Auslösevorrichtung 16 gekoppeltes Detektions-mittel 18, das zur Detektion der Annäherung des Abschlepp-Satelliten 200 ausgebildet ist. Liegt das Kriterium für die Annäherung des Abschlepp-Satelliten 200 vor, so führt das Detektionsmittel 18 der Auslösevorrichtung 16 ein Ansteuersignal zu, wodurch die Ansteuerung der Kabelaufnahme 15 zum Ausfahren des Kabels 10 bewirkt wird.

Beispielsweise kann durch optische Sensoren oder Radar das Unterschreiten einer vorgegebenen Distanz durch das Detektionsmittel 18 erfasst werden. Die Annäherung des Abschlepp-Raumfahrzeugs 200 an den Satelliten 100 kann beispielsweise auch durch einen bidirektionalen Kommunikationsaustausch erfolgen. Prinzipiell kann hierbei jede beliebige Kommunikationsschnittstelle eingesetzt werden. Insbesondere kann die Verwendung einer Infrarot-Schnittstelle in Betracht kommen.

Nach Erhalt des Ansteuersignals von der Auslösevorrichtung 16 wird die Abschleppvorrichtung 1 ausgelöst, d.h. die Kabelaufnahme 15 fährt das in dieser enthaltene Kabel 10 aus. Um das Ausfahren des Kabels 10 auch bei einem Defekt der Stromversorgung des Satelliten 100 sicherstellen zu können, verfügt die Abschleppvorrichtung 1 bevorzugt über eine autonome Stromversorgung 17, beispielsweise eine separate Solarzelle. Diese versorgt zumindest das Detektionsmittel 18 mit Strom. Sofern die Auslösevorrichtung 16 elektrisch betrieben ist, übernimmt die autonome Stromversorgung 17 auch deren Stromversorgung. Zusätzlich verfügt die Auslösevorrichtung 16 bzw. die Kabelaufnahme 15 über einen mechanischen Antrieb, beispielsweise einen Federspeicher, so dass das Kabel 10 über Federkraft ausgefahren werden kann. Hierdurch kann eine Redundanz für die bestimmungsgemäße Funktion der Abschleppvorrichtung 1 bereitgestellt werden. Sollte die Stromversorgung der Abschleppvorrichtung 1 ausfallen, so kann das Kabel automatisch z.B. über Federkraft ausgefahren werden. Damit ist sichergestellt, dass der Andockpunkt für den Abschlepp-Satelliten 200 in jedem Falle verfügbar ist.

Das Kabel 10 weist eine Länge von 5 bis 25 m, insbesondere von 8 bis 12 m, und am Meisten bevorzugt von ca. 10 m auf. Hierdurch ist sichergestellt, dass ein ausreichender Abstand zwischen Abschlepp-Satelliten 200 und dem abzuschleppenden Satelliten 100 bei einem Abschleppvorgang gegeben ist. Hierdurch können Kollisionen vermieden werden.

Das komplementäre Verbindungsstück 213 des Abschlepp-Satelliten 200 ist beispielsweise an einem Greifarm 210 des Abschlepp-Satelliten 200 angeordnet. Dieser kann in seinen Bewegungen gesteuert werden, um das Greifen des Verbindungsstücks 13 vornehmen zu können. Der Arm 210 kann dabei über eine Mehrzahl an Gelenken verfügen, um eine maximale Beweglichkeit des komplementären Verbindungsstücks 213 sicherzustellen.

Ferner verfügt der Abschlepp-Satellit 200 über ein Detektionsmittel 214 zur Detektion der Positionierhilfe 14 des Verbindungsstücks 13 der Abschlepp-Vorrichtung 1. Das Detektionsmittel 14 kann auf Basis optischer oder RF-Erkennungsmittel oder anderer Sensoriken arbeiten.

Um einem Abschlepp-Satelliten 200 das Abschleppen und die Entsorgung einer möglichst großen Anzahl an (defekten) Satelliten 100 zu ermöglichen, ist es bevorzugt, wenn das Verbindungsstück 13 (und damit auch das komplementäre Verbindungsstück 213) als standardisierter Adapter ausgebildet ist. Hierdurch wird ein vereinfachtes Ankoppeln ermöglicht, wodurch ein Abschlepp-Satellit mehrere Missionen erfüllen kann.

Durch das zusätzliche Vorsehen einer Positionierhilfe, die bevorzugt in Verbindung mit dem Verbindungsstück 13 eine die Taumelbewegung des abzuschleppenden Satelliten reduzierende Masse ausbildet, kann der Abschlepp-Satellit wesentlich kostengünstiger im Vergleich zu komplexen Greifsystemen realisiert werden, da das Greifen und Verbinden der beiden Verbindungsstücke erleichtert ist.

### Bezugszeichenliste

- 1: Abschleppvorrichtung
- 10: Kabel
- 11: erstes Ende
- 12: zweites ende
- 13: Verbindungsstück
- 14: Positionierhilfe
- 15: Kabelaufnahme
- 16: Auslösevorrichtung
- 17: Stromversorgung
- 18: Detektionsmittel
- 19: Masse
- 100: Raumfahrzeug (Satellit)
- 200: Abschlepp-Raumfahrzeug
- 210: Arm
- 213: zu dem Verbindungsstück 13 komplementäres Verbindungsstück
- 214: Detektionsmittel

## Patentansprüche

1. Abschleppvorrichtung (1) für ein im Orbit befindliches Raumfahrzeug (100) mit einem Kabel (10), dessen erstes Ende (11) dazu vorgesehen ist, dauerhaft mit einem potentiell abzuschleppenden Raumfahrzeug (100) gekoppelt zu sein und dessen zweites Ende (12) zum Zweck des Abschleppens zur zumindest temporären Verbindung mit einem Abschlepp-Raumfahrzeug (200) ausgebildet ist, wobei an dem zweiten Ende (12) des Kabels (10) ein Verbindungsstück (13) zur mechanischen Verbindung mit einem komplementären Verbindungsstück (213) des Abschlepp-Raumfahrzeugs (200) und eine Positionierhilfe (14) zur vereinfachten Detektion des Verbindungsstücks (13) durch das Abschlepp-Raumfahrzeug (200) angeordnet sind.

2. Abschleppvorrichtung nach Anspruch 1, **dadurch gekennzeichnet, dass** an dem zweiten Ende (12) des Kabels (10) eine derart beschaffene Masse (17) angeordnet ist, dass eine Taumelbewegung des Kabels 10 und/oder des Satelliten 100 reduziert wird.

3. Abschleppvorrichtung nach Anspruch 1, **dadurch gekennzeichnet, dass** die Masse (17) durch das Verbindungsstück (13) und/oder die Positionierhilfe bereitgestellt sind.

4. Vorrichtung nach einem der vorhergehenden Ansprüche, **dadurch gekennzeichnet, dass** das Kabel eine Länge von 5 bis 25 m, insbesondere von 8 bis 12 m, am meisten bevorzugt von 10 m, aufweist.

5. Vorrichtung nach einem der vorhergehenden Ansprüche, **dadurch gekennzeichnet, dass** das Verbindungsstück (13) ein standardisierter Adapter ist.

6. Vorrichtung nach einem der vorhergehenden Ansprüche, **dadurch gekennzeichnet, dass** die Positionierhilfe (14) einen Reflektor und/oder einen Permanentmagneten umfasst.

7. Vorrichtung nach einem der vorhergehenden Ansprüche, **dadurch gekennzeichnet, dass** diese eine Kabelaufnahme (15) aufweist, welche das Kabel (10) Raum sparend aufnimmt und dieses nach Erhalt eines Ansteuersignals zur Verbindung mit dem komplementären Verbindungsstück (213) des Abschlepp-Raumfahrzeugs (200) ausfährt, um das Raumfahrzeug (100) abzuschleppen.

8. Abschleppvorrichtung nach Anspruch 7, **dadurch gekennzeichnet, dass** die Kabelaufnahme (15) mit einer Auslösevorrichtung (16) gekoppelt ist, welche das Ausfahren des Kabels (10) steuert.

9. Abschleppvorrichtung nach Anspruch 7 oder 8, **dadurch gekennzeichnet, dass** die Auslösevorrichtung (16) elektrisch betreibbar ist.

10. Abschleppvorrichtung nach Anspruch 9, **dadurch gekennzeichnet, dass** die Auslösevorrichtung (16) über eine autonome Stromversorgung (17) verfügt.

11. Abschleppvorrichtung nach einem der Ansprüche 7 bis 10, **dadurch gekennzeichnet, dass** die Auslösevorrichtung (16) mechanisch betreibbar ist.

12. Abschleppvorrichtung nach einem der Ansprüche 8 bis 11, **dadurch gekennzeichnet, dass** diese ein mit der Auslösevorrichtung (16) gekoppeltes Detektionsmittel (18) umfasst, welches dazu ausgebildet ist, die Annäherung eines Abschlepp-Raumfahrzeugs (200) zu detektieren und, insbesondere bei Unterschreiten einer vorgegebenen Distanz, der Auslösevorrichtung (16) ein Ansteuersignal zuzuführen, um das Ausfahren des Kabels (10) zu initiieren.

13. Raumfahrzeug (100), insbesondere Satellit, umfassend eine Abschleppvorrichtung (1) nach einem der vorhergehenden Ansprüche.

14. Abschlepp-Raumfahrzeug (200), umfassend ein Verbindungsstück (213) zur mechanischen Verbindung mit einem an dem zweiten Ende (12) eines Kabels (10) angeordneten komplementären Verbindungsstück (13) einer Abschleppvorrichtung (1) nach einem der vorhergehenden Ansprüche.

15. Abschlepp-Raumfahrzeug nach Anspruch 14, **dadurch gekennzeichnet, dass** dieses Detektionsmittel (214) zur Detektion einer Positionierhilfe (14) des komplementären Verbindungsstücks (13) der Abschleppvorrichtung (1) umfasst.
